# EUROPEAN PATENT SPECIFICATION

(11) **EP 2 254 027 B1**
(45) Date of publication and mention of the grant of the patent: **07.11.2018**
(21) Application number: 10176250.8
(22) Date of filing: 27.02.2004
(51) Int. Cl.: G06F 3/033, G06F 3/023, G06F 3/048

(54) **Text input system for a mobile electronic device and methods thereof**
Texteingabesystem sowie -verfahren für ein elektronisches Mobilgerät
Système de saisie de texte pour un dispositif électronique mobile et procédés associés

(43) Date of publication of application: 24.11.2010
(62) Divisional of application: 04251161.8
(73) Proprietor: BlackBerry Limited, Waterloo, ON N2K 0A7 (CA)
(72) Inventor: Griffin, Jason Tyler, Waterloo Ontario N2L 3W8 (CA)
(74) Representative: Fennell, Gareth Charles

(56) References cited:
- US-A- 5 748 512
- US-B1- 6 259 436

## Description

### FIELD OF THE INVENTION

The present invention relates generally to mobile electronic devices having text input.

### BACKGROUND OF THE INVENTION

Many mobile electronic devices now include functionality that requires text input, such as, for example, sending e-mail, writing short message service (SMS) messages, browsing the Internet, entering data into applications such as contacts, notes, task list, and calendars, etc. Many different text input systems are currently available, and some mobile electronic devices provide more than one text input system. A non-exhaustive list of text input systems in mobile electronic devices includes, for example, a) a virtual keyboard from which text is entered by selecting keys using a narrow-tipped stylus; b) a QWERTY thumbboard; and c) nine number keys for the numbers 1-9, where typically up to three or four letters are associated with a particular number key. In the latter example, text is entered by pressing the number key associated with the desired letter, for example, using multi-tap, long-press, and similar techniques, or by pressing the number key only once (and possibly pressing additional keys) and using a predictive text algorithm such as, for example, "text on nine keys" (T9®) from Tegic Communications Inc. of Seattle, Wash., iTAP® from the Lexicus Division of Motorola in Mountain View, Calif. or LetterWise from Eatoni Ergonomics Inc. of New York, N.Y.

US 5,748,512 discloses a method for selecting a character for entry when a key of the keyboard is struck off center. If a user's contact point on the keyboard is within a distance of 0.2 of the width of a key from the center point of the key, a touch is considered a "direct hit" and the character represented by the key that has been directly hit is selected. If the touch contact point is not within a distance of 0.2 of the width of a key from the center point of a key, the method operates to select the most appropriate character based on the occurrence frequency and the location of the contact point of the user's touch.

Since many mobile electronic devices are handheld, it may be beneficial to reduce their size.

### SUMMARY OF THE INVENTION

One aspect provides a method comprising: associating a plurality of areas of at least one touch interface with a plurality of characters, wherein each of the plurality of areas is uniquely associated with only one of the plurality of characters; wherein the plurality of areas overlap with one another to form first regions which uniquely represent one character and second regions that represent more than one of the plurality of characters; and when a location of a touch is included in a first region of one of the plurality of areas, identifying the character associated with the area where the first region is formed; when a location of the touch is included in one of the second regions, identifying which characters are associated with the plurality of areas forming the second region.

When two or more characters are identified, predictive text software may be used to input one of the identified characters.

The method may further comprise providing predictive text software with an indication that the location is closer to one of the identified characters than to others of the identified characters.

The method may further comprise providing predictive text software with an indication of how much closer the location is to one of the identified characters than to others of the identified characters.

For a first character of the plurality of characters in a first row, an area of the touchscreen associated with the first character may be overlapped by an area of the touchscreen associated with a second character of a row adjacent to the first row.

The first of the plurality of areas may be bounded by at least a first line that is a first distance from a center of a first character that is associated solely with the first of the first plurality of areas.

The first of the plurality of areas may be bounded by at least a second line that is a second distance from a center of a first character that is associated solely with the first of the first plurality of areas, and the second line may not be the same as the first line.

Another aspect provides a computer-readable medium having computer-readable code executable by at least one processor of an electronic device to perform the method of any preceding claim.

Another aspect provides a device comprising: at least one touch interface configured to display a plurality of characters and receive a touch by a user; a microprocessor configured to: associate a first plurality of areas of the at least one touch interface with the plurality of characters, wherein each of the first plurality of areas is uniquely associated with only one of the plurality of characters, wherein the plurality of areas overlap with one another to form first regions which uniquely represent one character, and second regions that represent more than one of the plurality of characters, and when a location of the touch is included in a first region of one of the first plurality of areas, identifying the character associated with the area where the first region is formed;
and when a location of the touch is included in one of the second regions, identifying which characters are associated with the plurality of areas forming the second region.

For a first character of the plurality of characters in a first row, an area of the at least one touch interface associated with the first character may be overlapped by an area of the at least one touch interface associated with a second character of a row adjacent to the first row.

The plurality of characters may be arranged in a plurality of rows spaced at a sufficient vertical distance such that there is no ambiguity as to which of the plurality of rows is being touched.

The at least one touch interface may comprise any of one or more touchpads and a touchscreen.

The microprocessor may be configured to execute a predictive text software module to input one character when a plurality of characters is identified.

A first of the first plurality of areas may be bounded by at least a first line that is a first distance from a center of a first character that is associated solely with the first of the first plurality of areas.

A first of the first plurality of areas may be bounded by at least a second line that is a second distance from a center of a first character that is associated solely with the first of the first plurality of areas, wherein the second line is not the same as the first line.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:
FIG. 1 is a simplified front view of an exemplary mobile electronic device;
FIG. 2 is a simplified front view of another exemplary mobile electronic device;
FIG. 3 is a flowchart illustration of an exemplary method for determining which two adjacent letters to pass to the predictive text software module;
FIG. 4 is an illustration of a virtual "T" key, a virtual "R" key and a virtual "Y" key, in accordance with some embodiments of the present invention;
FIG. 5 is a flowchart illustration of another exemplary method for determining which letter to select as input or which two adjacent letters to pass to the predictive text software module;
FIG. 6 is an illustration of a virtual "T" key, a virtual "R" key and a virtual "Y" key, in accordance with some embodiments of the present invention;
FIG. 7 is a flowchart illustration of an exemplary method for determining which letters to pass to the predictive text software module;
FIGS. 8A and 8B are illustrations of a virtual "G" key in accordance with alternate embodiments of the present invention; and
FIG. 9 is a block diagram of an exemplary mobile electronic device.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the embodiments of the invention. However it will be understood by those of ordinary skill in the art that embodiments of the invention may be practiced without these specific details. In other instances, well-known methods, procedures and components have not been described in detail so as not to obscure the invention.

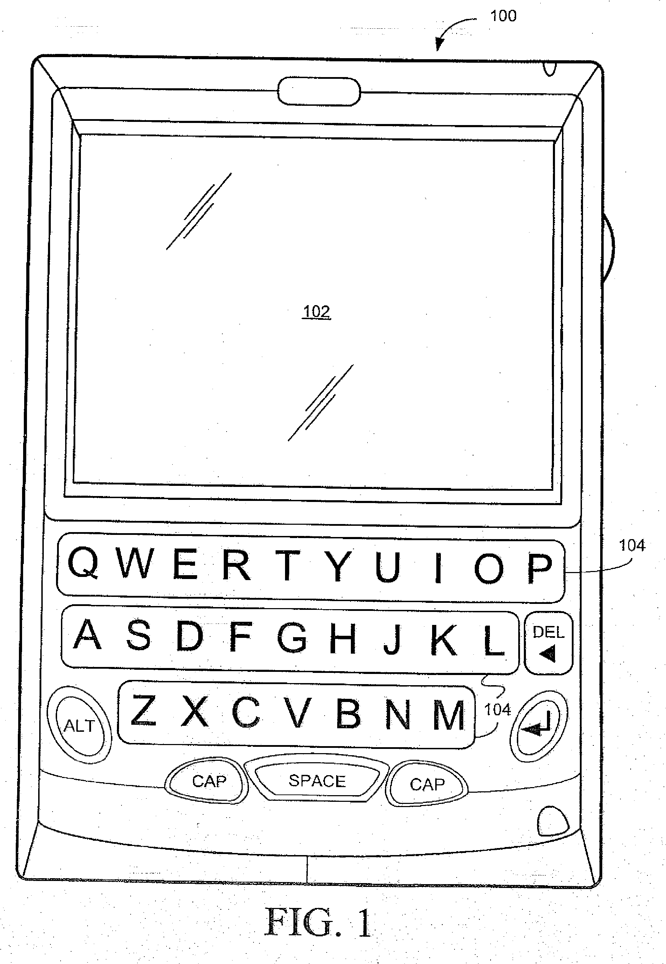

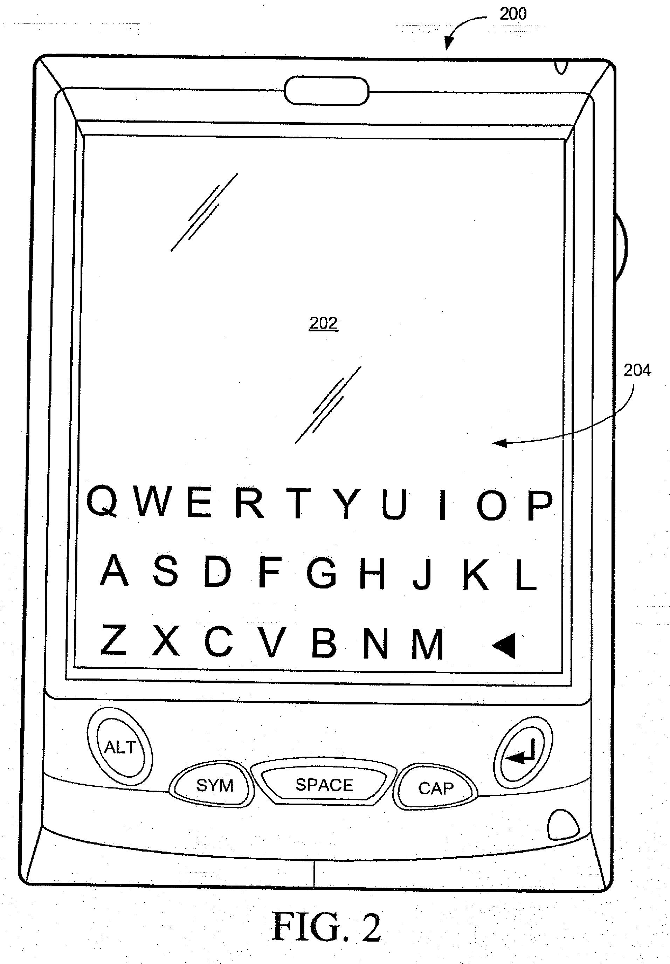

Reference is now made to FIG. 1, which is a simplified front view of an exemplary mobile electronic device 100, and to FIG. 2, which is a simplified front view of another exemplary mobile electronic device 200. Device 100/200 may be a personal data assistant (PDA), a personal information manager (PIM), a two-way pager, a cellphone, a handheld terminal, and the like. In some embodiments, device 100/200 may be a two-way communication device with data communication capabilities having the capability to communicate with other computer systems. In some embodiments, device 100/200 may also include the capability for voice communications.

Device 100/200 may have a display 102/202. A non-exhaustive list of examples for display 102/202 includes a liquid crystal display (LCD) screen and a thin-film-transistor (TFT) LCD screen.

Device 100 may have one or more touch interfaces, including rows of touchpads 104 to allow text input. A non-exhaustive list of examples of touchpads includes, for example, capacitive touchpads and resistive touchpads. The rows may be straight or curved or have any other appropriate shape.

In the example shown in FIG. 1, a top touchpad 104 includes the letters "Q", "W", "E", "R", "T", "Y", "U", "I", "O", and "P", a middle touchpad 104 includes the letters "A", "S", "D", "F", "G", "H", "J", "K", and "L", and a bottom touchpad 104 includes the letters "Z", "X", "C", "V", "B", "N", and "M". The letters may be printed directly on the touchpad, or may be located behind or printed on the back of a substantially translucent touchpad. If desired, the letters may be evenly spaced within each touchpad. In other examples, the arrangement of letters among and within the touchpad may be different than that shown in FIG. 1. Similarly, in other examples, the number of touchpads may be different than that shown in FIG. 1. Similarly, in other examples, a single large touchpad may include more than one row of letters.

Device 200 may include one or more touch interfaces, including a touchscreen 204. A non-exhaustive list of touchscreens includes, for example, resistive touchscreens, capacitive touchscreens, projected capacitive touchscreens, infrared touchscreens and surface acoustic wave (SAW) touchscreens.

In the example shown in FIG. 2, letters are arranged in rows in touchscreen 204. The letters may be printed directly on display 202. Touchscreen 204 may be transparent and placed in front of display 202, or alternatively, touchscreen 204 may be behind display 202. If desired, the letters may be evenly spaced within each row. In other examples, the arrangement of letters among and within the rows may be different than that shown in FIG. 2. Similarly, in other examples, the number of rows of letters in the touchscreen may be different than that shown in FIG. 2.

When a user of device 100 touches one of the touchpads 104, the touchpad will determine the location of the touch on the touchpad. The way in which the location is determined and the precision of the location will likely depend on the type of touchpad. Similarly, when a user of device 200 touches touchscreen 204, the touchscreen will determine the location of the touch on the touchscreen. The way in which the location is determined and the precision of the location will likely depend on the type of touchscreen.

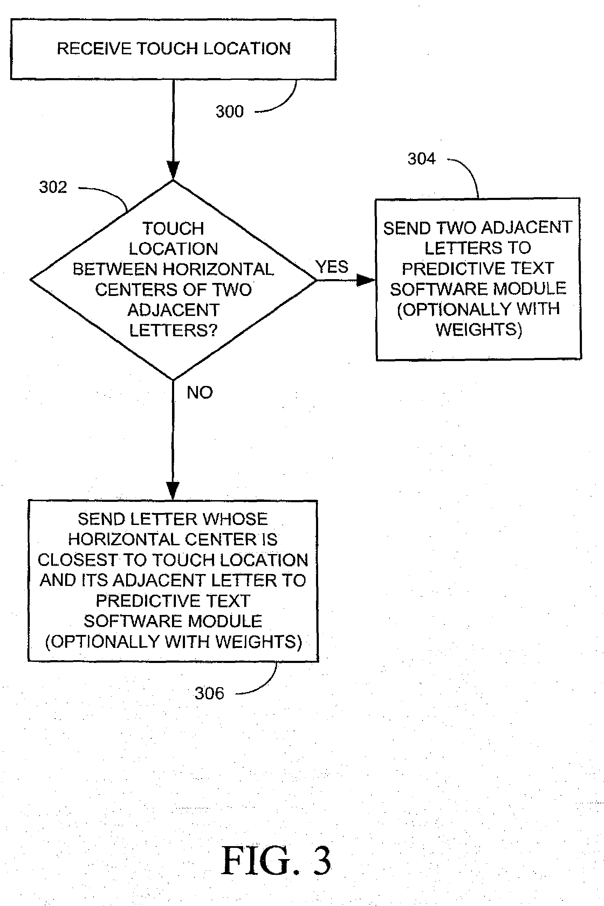

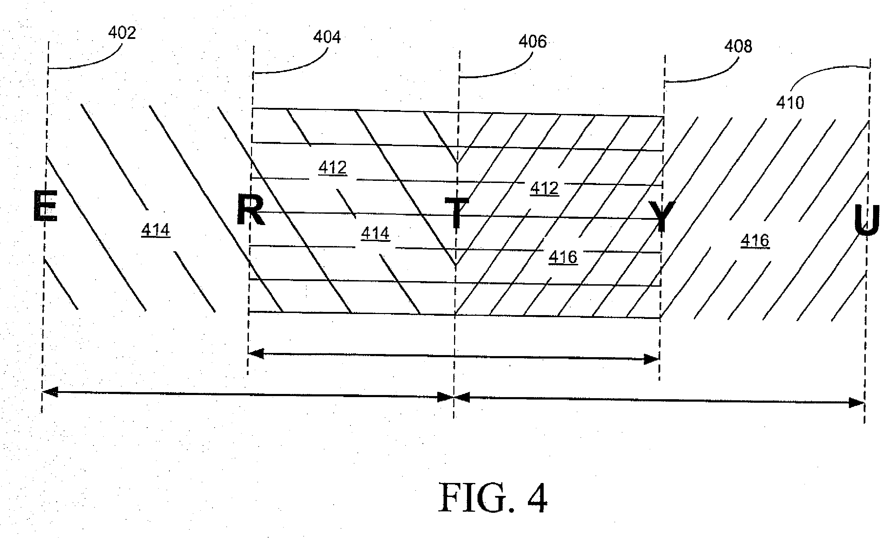

In one embodiment, described hereinbelow with respect to FIGS. 3 and 4, each touch results in the selection of two adjacent letters to be passed to a predictive text software module. The predictive text software module is to determine which of the two adjacent letters the user intended to enter. A force feedback system (for example, a vibrator) or an audio system may be used to provide feedback to the user to indicate to the user that the software has registered an input.

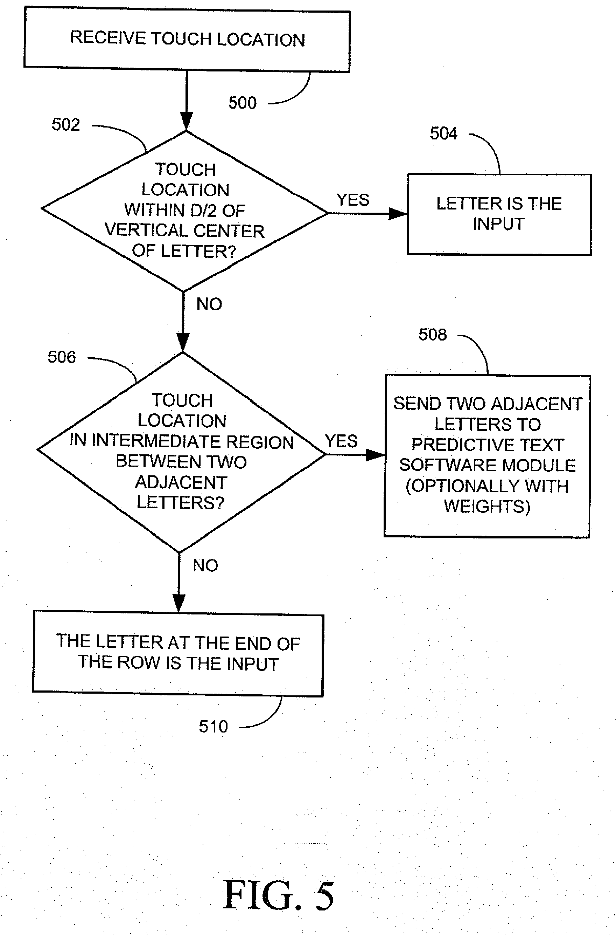

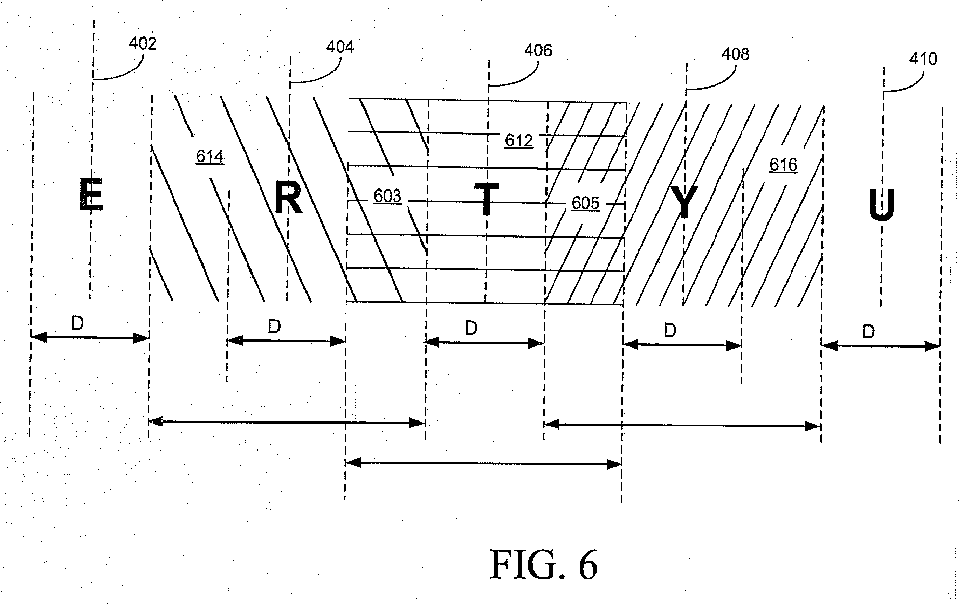

In another embodiment, described hereinbelow with respect to FIGS. 5 and 6, a touch sufficiently close to the horizontal center of a letter results in the selection of that letter, while a touch in an intermediate area between two adjacent letters results in the selection of the two adjacent letters and passing the two adjacent letters to a predictive text software module. The predictive text software module is to determine which of the two adjacent letters the user intended to enter. A force feedback system (for example, a vibrator) or an audio system may be used to provide feedback to the user to indicate to the user that the software has registered an input.

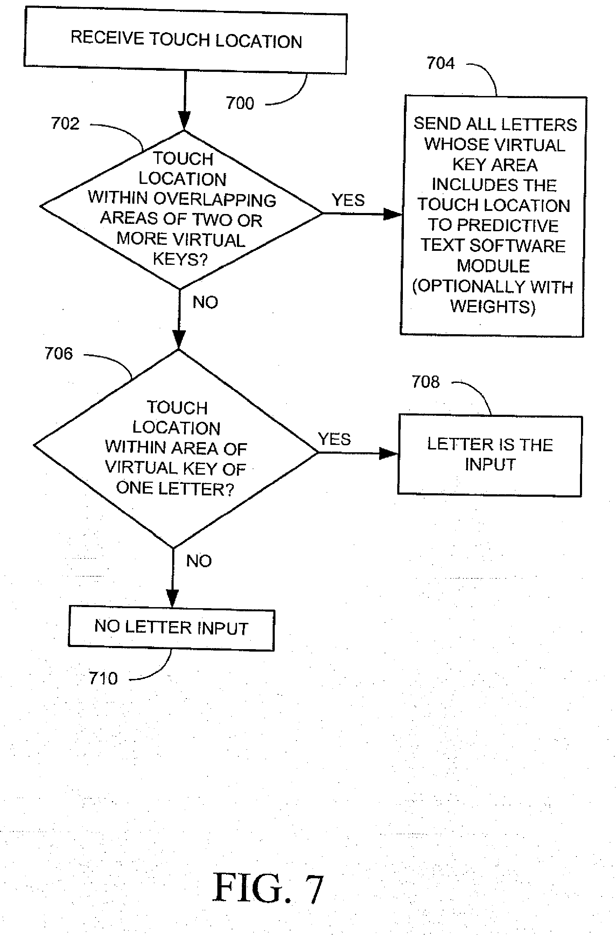

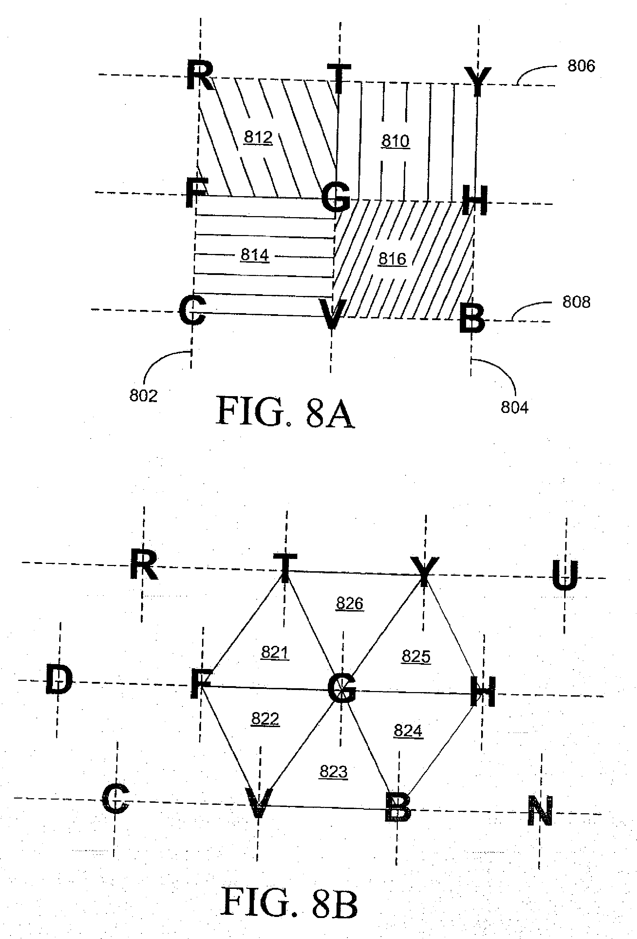

The embodiments described hereinbelow with respect to FIGS. 3 - 6 are applicable to device 100. They are applicable as well to device 200 if the rows of letters are spaced at a sufficient vertical distance that there is no ambiguity as to which row of letters is being touched. Further embodiments, described hereinbelow with respect to FIGS. 7 and 8, are applicable to device 200 if the rows of letters are spaced such that there is ambiguity as to which row of letters is being touched.

Reference is now made to FIGS. 3 and 4. FIG. 3 illustrates an exemplary method for determining which two adjacent letters to pass to the predictive text software module. FIG. 4 is an illustration of a virtual "T" key, a virtual "R" key and a virtual "Y" key, in accordance with some embodiments of the present invention. A touch location is received (300). If the touch location is between the horizontal centers of two adjacent letters (302), then the two adjacent letters are sent to the predictive text software module (304). For example, as shown in FIG. 4, if the touch location is between the horizontal center of "R" 404 and the horizontal center of "T" 406, then the letters "R" and "T" will both be passed to the predictive text software module, whereas if the touch location is between the horizontal center of "T" 406 and the horizontal center of "Y" 408, then the letters "T" and "Y" will both be passed to the predictive text software module. In this embodiment, a touch location should not be precisely at the horizontal center of a letter. This may be accomplished, for example, by requiring the touch location to be at one of a set of vertical lines and ensuring that the vertical lines are not aligned with the horizontal centers of the letters.

If the touch location is not between the horizontal centers of two adjacent letters (302), then the touch location is between the horizontal center of a letter at the end of a row and the corresponding edge of the touchpad/touchscreen. In this case, the letter whose horizontal center is closest to the touch location and its adjacent letter are sent to the predictive text software module (306). For example, if the touch location is between the horizontal center of "Q" and the edge of the touchpad/touchscreen nearest to the letter "Q", then the letters "Q" and "Y" will both be passed to the predictive text software module.

In some embodiments, the two adjacent letters sent to the predictive text software module in block 304 or block 306 may be sent with one or more numerical weights indicating that the touch location is closer to one of the two adjacent letters than to the other, or indicating how much closer the touch location is to one of the two adjacent letters than to the other. The predictive text software module may take these numerical weights into account when determining which of the two adjacent letters the user intended to enter.

As shown in FIG. 4, a virtual "T" key has an area 412, marked with horizontal hatching, which extends from the horizontal center of "R" 404 to the horizontal center of "Y" 408. Similarly, a virtual "R" key has an area 414, marked with wide diagonal hatching, which extends from the horizontal center of "E" 402 to the horizontal center of "T" 406, and a virtual "Y" key has an area 416, marked with narrow diagonal hatching, which extends from the horizontal center of "T" 406 to the horizontal center of "U" 410. The area 412 of the virtual "T" key is completely overlapped jointly by a portion of the area 414 of the virtual "R" key and a portion of the area 416 of the virtual "Y" key.

The touchpads of FIG. 1 may be designed so that the area of a virtual key (e.g. the area of the touchpad associated with a particular letter) is of an appropriate ergonomic size, shape and orientation for use by a finger or thumb. If Δ denotes the minimum horizontal length of a virtual key based on ergonomic considerations, then the overall horizontal length of a touchpad need not exceed (*n*+1)Δ/2, where *n* is the number of letters in the touchpad. In the example of device 100 shown in FIG. 1, *n* is 10 for the top touchpad, *n* is 9 for the middle touchpad and *n* is 7 for the bottom touchpad.

Similarly, the touchscreen of FIG. 2 may be designed so that the area of a virtual key is of an appropriate ergonomic size, shape and orientation for use by a finger or thumb. If Δ denotes the minimum horizontal length of a virtual key based on ergonomic considerations, then the overall horizontal length of a touchscreen need not exceed (*n*+1)Δ/2, where *n* is the number of letters in the row of the touchscreen having the most letters. In the example of device 200 shown in FIG. 2, *n* is 10, since the top row has the most letters.

In contrast, if each touch of the touchpad/touchscreen were to select only a single letter, then the areas of the virtual keys would not be permitted to overlap and the overall horizontal length of the touchpad/touchscreen would have to be sufficient to accommodate this restriction while providing virtual key areas of an appropriate size for use by a finger or thumb. If Δ denotes the minimum horizontal length of a virtual key based on ergonomic considerations, then the overall horizontal length of a touchpad/touchscreen having virtual keys that are not permitted to overlap would need to be at least *n*Δ, where *n* is the number of letters in the touchpad or the number of letters in the row of the touchscreen having the most letters.

Reference is now made to FIGS. 5 and 6. FIG. 5 illustrates another exemplary method for determining which two adjacent letters to pass to the predictive text software module. FIG. 6 is an illustration of a virtual "T" key, a virtual "R" key and a virtual "Y" key, in accordance with some embodiments of the present invention.

A touch location is received (500). If the touch location is within a predetermined distance *D*/*2* of the horizontal centers of a letter (502), then the letter is the input (504). For example, as shown in FIG. 6, if the touch location is within *D*/*2* of the horizontal center of "R" 404, then the input is "R". If the touch location is within D/2 of the horizontal center of "T" 406, then the input is "T". If the touch location is within *D*/*2* of the horizontal center of "Y" 408, then the input is "Y".

However, if the touch location is not within the predetermined distance *D*/*2* of the horizontal center of a letter, then it is checked whether the touch location is in an intermediate region between two adjacent letters (506). If so, then the two adjacent letters are sent to the predictive text software module (508). For example, as shown in FIG. 6, if the touch location is in an intermediate area 603 between "R" and "T", then the letters "R" and "T" will both be passed to the predictive text software module. If the touch location is in an intermediate area 605 between "T" and "Y", then the letters "T" and "Y" will both be passed to the predictive text software module.

If the touch location is not in an intermediate region between two adjacent letters (506), then the touch location is between the horizontal center of a letter at the end of a row and the corresponding end of the touchpad. The letter at the end of the row is then unambiguously the input (510).

As shown in FIG. 6, the virtual "T" key has an area 612, marked with horizontal hatching, which extends from the left edge of intermediate area 603 to the right edge of intermediate area 605. Similarly, the virtual "R" key has an area 614, marked with wide diagonal hatching, which extends from the right edge of intermediate area 603 to within D/2 of the horizontal center of "E" 402, and the virtual "Y" key has an area 616, marked with narrow diagonal hatching, which extends from the left edge of intermediate area 605 to within *D*/*2* of the horizontal center of "U" 410. The areas of the virtual keys partially overlap to define the intermediate areas.

If Δ denotes the minimum horizontal length of a virtual key based on ergonomic considerations, then the overall horizontal length of a touchpad/touchscreen may be larger than (*n*+1)Δ/2 but less than *n*Δ, where *n* is the number of letters in the touchpad or the number of letters in the row of the touchscreen having the most letters. The actual overall horizontal length will depend upon the extent of overlap of the areas of the virtual keys.

Reference is now made to FIGS. 7, 8A and 8B. FIG. 7 is a flowchart illustration of an exemplary method for determining which letters to pass to the predictive text software module. FIGS. 8A and 8B are illustrations of a virtual "G" key in accordance with alternate embodiments of the present invention.

A touch location is received (700). If the touch location is within overlapping areas of two or more virtual keys (702), then all letters whose virtual key area includes the touch location are selected and sent to the predictive text software module (704).

In some embodiments, the two or more letters sent to the predictive text software module in block 704 may be sent with one or more numerical weights indicating that the touch location is closer to one of the selected letters than to the others, or indicating how much closer the touch location is to one of the selected letters than to the others. The predictive text software module may take these numerical weights into account when determining which of the selected letters the user intended to enter.

For example, the virtual key of the letter "G" shown in FIG. 8A is defined as the area bounded by the horizontal centers 802 and 804 of the letters "F" and "H", respectively and by the vertical centers 806 and 808 of the letters "R", "T" and "Y", and "C", "V" and "B", respectively. If the touch location is in the region denoted 810, then the letters "G", "T", "Y" and "H" are sent to the predictive text software module. If the touch location is in the region denoted 812, then the letters "G", "T", "R" and "F" are sent to the predictive text software module. If the touch location is in the region denoted 814, then the letters "G", "F", "C" and "V" are sent to the predictive text software module. If the touch location is in the region denoted 816, then the letters "G", "H", "B" and "V" are sent to the predictive text software module. In an alternative embodiment, each touch may result in only three letters being sent to the predictive text software module, such as, for example, the three letters having centers that are closest to the touch location.

In another example, the virtual key of the letter "G" shown in FIG. 8B is defined as the area bounded by the lines joining the centers of the letters nearest to the letter "G". If the touch location is in the region denoted 821, then the letters "G", "T" and "F" are sent to the predictive text software module. If the touch location is in the region denoted 822, then the letters "G", "F" and "V" are sent to the predictive text software module. If touch location is in the region denoted 823, then the letters "G", "V" and "B" are sent to the predictive text software module. If touch location is in the region denoted 824, then the letters "G", "B" and "H" are sent to the predictive text software module. If touch location is in the region denoted 825, then the letters "G", "H" and "Y" are sent to the predictive text software module. If the touch location is in the region denoted 826, then the letters "G", "Y" and "T" are sent to the predictive text software module.

If the touch location is within the area of the virtual key of only one letter (706), then the letter is the input (708). Otherwise, the touch location is not sufficiently close to any of the letters to generate letter input (710).

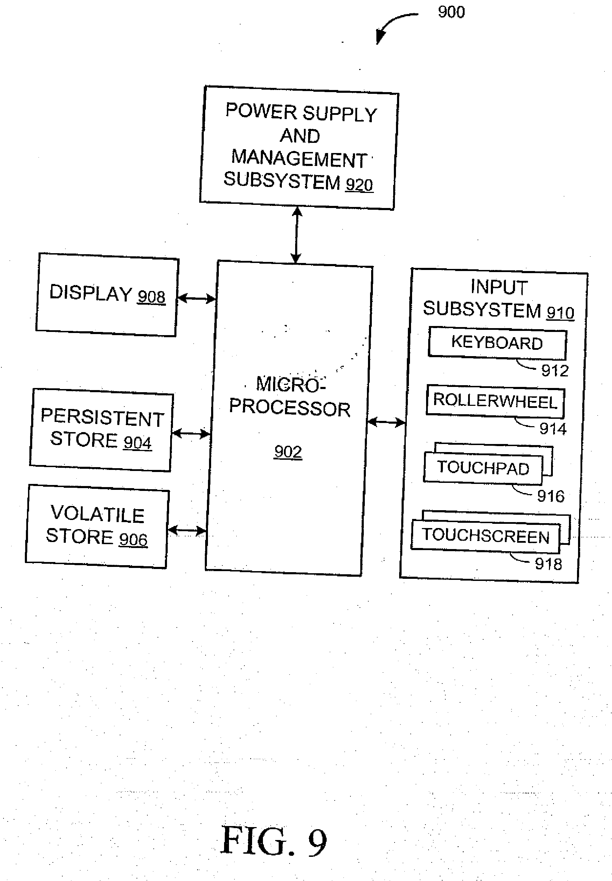

Reference is now made to FIG. 9. FIG. 9 is a block diagram of an exemplary mobile electronic device 900. Device 900 may be a personal data assistant (PDA), a personal information manager (PIM), a two-way pager, a cellphone, a handheld terminal, and the like. In some embodiments, device 900 may be a two-way communication device with data communication capabilities having the capability to communicate with other computer systems. In some embodiments, device 900 may also include the capability for voice communications. Device 100 of FIG. 1 and device 200 of FIG. 2 are examples for device 900.

Device 900 comprises a microprocessor 902 that controls the overall operation of device 900, a persistent store 904, a volatile store 906, a display 908 and an input subsystem 910. Device 900 may comprise additional components that are not shown in FIG. 9 so as not to obscure the description of embodiments of the invention. Operating system software used by microprocessor 902 is typically stored in persistent store 904, such as, for example, flash memory or read-only memory (ROM), programmable ROM (PROM), mask ROM, electrically programmable read-only memory (EPROM), electrically erasable and programmable read only memory (EEPROM), non-volatile random access memory (NVRAM), a magnetic or optical card, CD-ROM, and the like. Microprocessor 902, in addition to its operating system functions, enables execution of software applications on device 900. The operating system, specific device applications, or parts thereof, may be temporarily loaded into volatile store 906, such as for example, random access memory (RAM), static random access memory (SRAM), dynamic random access memory (DRAM), synchronous dynamic random access memory (SDRAM), RAMBUS dynamic random access memory (RDRAM), double data rate (DDR) memory, and the like.

A non-exhaustive list of examples for display 908 includes a liquid crystal display (LCD) screen and a thin-film-transistor (TFT) LCD screen.

Input subsystem 910 may include any of a keyboard 912, a roller wheel 914, one or more touchpads 916, and one or more touchscreens 918, and the like, or any combination thereof.

Device 900 is battery-powered and includes a power supply and management subsystem 920. Although current technology makes use of a battery, future technologies such as micro fuel cells may provide the power to device 900.

The methods described hereinabove and illustrated with respect to FIGS. 3, 5 and 7 may be stored as instructions, for example in persistent store 904, and executed by microprocessor 902 during processing of user input. The predictive text software module referred to hereinabove may also be stored as instructions, for example in persistent store 904, and executed by microprocessor 902. The predictive text software module is to determine which of the selected letters the user intended to enter, as is known in the art, possibly with further input from the user.

Unlike "text on nine keys" (T9), which determines which of three or four letters is the letter that the user intended to enter, in some embodiments of the present invention, only two letters are sent to the predictive text software module. Moreover, in T9, the grouping of letters in groups of three or four is fixed and always the same (e.g. {"A", "B" and "C"}, {"D", "E" and "F"}, {"G", "H" and "I"}, {"J", "K" and "L"}, {"M", "N" and "O"}, {"P", "Q", "R" and "S"}, {"T", "U" and "V"} and {"W", "X", "Y" and "Z"}). In contrast, in embodiments of the invention, the groups of letters sent to the predictive text software module (and in some cases, the number of letters sent) depend upon the touch location (e.g. {"R" and "T"} or {"T" and "Y"}). T9 is generally applicable to physical keys coupled to a switch, while the embodiments of the present invention described hereinabove are applicable to "virtual" keys, for example, on a touchpad or touchscreen. Even in situations where T9 is applied to virtual keys, the virtual keys displayed to the user are such that the letters are presented to the user in fixed groupings.

Unlike reduced QWERTY keyboards, in which letters are paired up to reduce the number of physical keys and therefore the number of switches, in embodiments of the present invention, the appearance of a traditional QWERTY keyboard is preserved. Moreover, reduced QWERTY keyboards always pair the same two letters, while embodiments of the present invention may pair a given letter with either of its adjacent letters (if the given letter is not at the end of a row).

It will be appreciated that although the description of some embodiments of the invention given above is in terms of rows of letters and horizontal centers of letters, in alternative embodiments of the invention, the letters are arranged in columns and the touch location relative to the vertical centers of letters is used to determine which two adjacent letters are to be selected.

While certain features of embodiments of the invention have been illustrated and described herein, many modifications, substitutions, changes, and equivalents will now occur to those of ordinary skill in the art. It is, therefore, to be understood that the appended claims are intended to cover all such modifications.

## Claims

1. A method comprising:
associating a plurality of areas of at least one touch interface with a plurality of characters, wherein each of the plurality of areas is uniquely associated with only one of the plurality of characters; wherein
the plurality of areas overlap with one another to form first regions which uniquely represent one character and second regions that represent more than one of the plurality of characters; and
when a location of a touch is included in a first region of one of the plurality of areas, identifying the character associated with the area where the first region is formed;
when a location of the touch is included in one of the second regions (412, 414, 416), identifying which characters are associated with the plurality of areas forming the second region.

2. The method of claim 1, further comprising, when two or more characters are identified, using predictive text software to input one of the identified characters.

3. The method of claim 1, further comprising providing predictive text software with an indication that the location is closer to one of the identified characters than to others of the identified characters.

4. The method of claim 1, further comprising providing predictive text software with an indication of how much closer the location is to one of the identified characters than to others of the identified characters.

5. The method of claim 1, wherein for a first character of the plurality of characters in a first row, an area of the touchscreen (204) associated with the first character is overlapped by an area of the touchscreen (204) associated with a second character of a row adjacent to the first row.

6. The method of claim 1, wherein a first of the first plurality of areas is bounded by at least a first boundary that is a first distance from a center of a first character that is associated solely with the first of the first plurality of areas.

7. The method of claim 6, wherein a first of the first plurality of areas is bounded by at least a second boundary that is a second distance from a center of a first character that is associated solely with the first of the first plurality of areas, wherein the second boundary is not the same as the first boundary.

8. A computer-readable medium having computer-readable code executable by at least one processor of an electronic device (100, 200) to perform the method of any preceding claim.

9. A device (100, 200) comprising:
at least one touch interface configured to display a plurality of characters and receive a touch by a user;
a microprocessor (902) configured to:
associate a first plurality of areas of the at least one touch interface with the plurality of characters, wherein each of the first plurality of areas is uniquely associated with only one of the plurality of characters, wherein
the plurality of areas overlap with one another to form first regions which uniquely represent one character, and second regions that represent more than one of the plurality of characters, and
when a location of the touch is included in a first region of one of the first plurality of areas, identifying the character associated with the area where the first region is formed;
and when a location of the touch is included in one of the second regions (412, 414, 416), identifying which characters are associated with the plurality of areas forming the second region.

10. The device (100, 200) of claim 9, wherein for a first character of the plurality of characters in a first row, an area of the at least one touch interface associated with the first character is overlapped by an area of the at least one touch interface associated with a second character of a row adjacent to the first row.

11. The device (100, 200) of claim 9, wherein the plurality of characters is arranged in a plurality of rows spaced at a sufficient vertical distance such that there is no ambiguity as to which of the plurality of rows is being touched.

12. The device (100, 200) of claim 9, wherein the at least one touch interface comprises any of one or more touchpads and a touchscreen (204).

13. The device (100, 200) of claim 9, wherein the microprocessor is configured to execute a predictive text software module to input one character when a plurality of characters is identified.

14. The device (100, 200) of claim 9, wherein a first of the first plurality of areas is bounded by at least a first boundary that is a first distance from a center of a first character that is associated solely with the first region of the first plurality of areas.

15. The device (100, 200) of claim 14, wherein a first of the first plurality of areas is bounded by at least a second boundary that is a second distance from a center of a first character that is associated solely with the first region of the first plurality of areas, wherein the second boundary is not the same as the first boundary.

## Patentansprüche

1. Verfahren, umfassend:
Verbinden einer Vielzahl von Bereichen von zumindest einer Berührungsschnittstelle mit einer Vielzahl von Zeichen, wobei jeder der Vielzahl von Bereichen mit nur einem der Vielzahl von Zeichen eindeutig verbunden ist; wobei
die Vielzahl von Bereichen einander überlappen, um erste Regionen, die ein Zeichen eindeutig darstellen, und zweite Regionen, die mehr als eines der Vielzahl von Zeichen darstellen, zu bilden; und
wenn eine Stelle einer Berührung in einer ersten Region von einem der Vielzahl von Bereichen enthalten ist, Identifizieren des Zeichens in Verbindung mit dem Bereich, an dem die erste Region gebildet ist;
wenn eine Stelle einer Berührung in einer der zweiten Regionen (412, 414, 416) enthalten ist, Identifizieren, welche Zeichen in Verbindung mit der Vielzahl von Bereichen stehen, die die zweite Region bilden.

2. Verfahren nach Anspruch 1, ferner umfassend, wenn zwei oder mehrere Zeichen identifiziert werden, ein Verwenden einer Texterkennungssoftware zur Eingabe von einem der identifizierten Zeichen.

3. Verfahren nach Anspruch 1, ferner umfassend ein Bereitstellen von Texterkennungssoftware mit einer Angabe, dass sich die Stelle näher an einem der identifizierten Zeichen als an anderen der identifizierten Zeichen befindet.

4. Verfahren nach Anspruch 1, ferner umfassend ein Bereitstellen von Texterkennungssoftware mit einer Angabe dazu, um wie viel sich die Stelle näher an einem der identifizierten Zeichen als an anderen der identifizierten Zeichen befindet.

5. Verfahren nach Anspruch 1, wobei für ein erstes Zeichen der Vielzahl von Zeichen in einer ersten Reihe ein Bereich des Touchscreens (204) in Verbindung mit dem ersten Zeichen durch einen Bereich des Touchscreens (204) in Verbindung mit einem zweiten Zeichen einer an die erste Reihe angrenzenden Reihe überlappt wird.

6. Verfahren nach Anspruch 1, wobei ein erster der ersten Vielzahl von Bereichen durch zumindest eine erste Grenze eingegrenzt ist, die sich in einem ersten Abstand von einer Mitte eines ersten Zeichens befindet, das nur mit dem ersten der ersten Vielzahl von Bereichen verbunden ist.

7. Verfahren nach Anspruch 6, wobei ein erster der ersten Vielzahl von Bereichen durch zumindest eine zweite Grenze eingegrenzt ist, die sich in einem zweiten Abstand von einer Mitte eines ersten Zeichens befindet, das nur mit dem ersten der ersten Vielzahl von Bereichen verbunden ist, wobei die zweite Grenze nicht dieselbe wie die erste Grenze ist.

8. Computerlesbares Medium mit computerlesbarem Code, der durch zumindest einen Prozessor einer elektronischen Vorrichtung (100, 200) ausführbar ist, um das Verfahren nach einem der vorhergehenden Ansprüche durchzuführen.

9. Vorrichtung (100, 200), umfassend:
zumindest eine Berührungsschnittstelle, die dazu konfiguriert ist, eine Vielzahl von Zeichen anzuzeigen und eine Berührung durch einen Benutzer zu empfangen;
einen Mikroprozessor (902), der zu Folgendem konfiguriert ist:
Verbinden einer ersten Vielzahl von Bereichen der zumindest einen Berührungsschnittstelle mit der Vielzahl von Zeichen, wobei jeder der ersten Vielzahl von Bereichen mit nur einem der Vielzahl von Zeichen eindeutig verbunden ist, wobei
die Vielzahl von Bereichen einander überlappen, um erste Regionen, die ein Zeichen eindeutig darstellen, und zweite Regionen, die mehr als eines der Vielzahl von Zeichen darstellen, zu bilden, und
wenn eine Stelle der Berührung in einer ersten Region von einem der ersten Vielzahl von Bereichen enthalten ist, Identifizieren des Zeichens in Verbindung mit dem Bereich, an dem die erste Region gebildet ist;
und wenn eine Stelle einer Berührung in einer der zweiten Regionen (412, 414, 416) enthalten ist, Identifizieren, welche Zeichen in Verbindung mit der Vielzahl von Bereichen stehen, die die zweite Region bilden.

10. Vorrichtung (100, 200) nach Anspruch 9, wobei für ein erstes Zeichen der Vielzahl von Zeichen in einer ersten Reihe ein Bereich der zumindest einen Berührungsschnittstelle in Verbindung mit dem ersten Zeichen durch einen Bereich der zumindest einen Berührungsschnittstelle in Verbindung mit einem zweiten Zeichen einer an die erste Reihe angrenzenden Reihe überlappt wird.

11. Vorrichtung (100, 200) nach Anspruch 9, wobei die Vielzahl von Zeichen in einer Vielzahl von Reihen angeordnet sind, die in einem ausreichenden vertikalen Abstand derart beabstandet sind, dass keine Mehrdeutigkeit dahingehend besteht, welche Vielzahl von Reihen gerade berührt werden.

12. Vorrichtung (100, 200) nach Anspruch 9, wobei die zumindest eine Berührungsschnittstelle beliebige von einem oder mehreren Touchpads und einem Touchscreen (204) umfasst.

13. Vorrichtung (100, 200) nach Anspruch 9, wobei der Mikroprozessor dazu konfiguriert ist, ein Texterkennungssoftwaremodul auszuführen, um ein Zeichen einzugeben, wenn eine Vielzahl von Zeichen identifiziert werden.

14. Vorrichtung (100, 200) nach Anspruch 9, wobei ein erster der ersten Vielzahl von Bereichen durch zumindest eine erste Grenze eingegrenzt ist, die sich in einem ersten Abstand von einer Mitte eines ersten Zeichens befindet, das nur mit der ersten Region der ersten Vielzahl von Bereichen verbunden ist.

15. Vorrichtung (100, 200) nach Anspruch 14, wobei ein erster der ersten Vielzahl von Bereichen durch zumindest eine zweite Grenze eingegrenzt ist, die sich in einem zweiten Abstand von einer Mitte eines ersten Zeichens befindet, das nur mit der ersten Region der ersten Vielzahl von Bereichen verbunden ist, wobei die zweite Grenze nicht dieselbe wie die erste Grenze ist.

## Revendications

1. Procédé comprenant le fait :
d'associer une pluralité de zones d'au moins une interface tactile à une pluralité de caractères, où chacune de la pluralité de zones est associée de manière unique à un seul caractère de la pluralité de caractères ; où
la pluralité de zones se chevauchent pour former des premières régions qui représentent de manière unique un seul caractère et des deuxièmes régions qui représentent plus d'un caractère de la pluralité de caractères ; et
d'identifier, lorsqu'un emplacement d'un effleurement est inclus dans une première région de l'une de la pluralité de zones, le caractère associé à la zone où la première région est formée ;
d'identifier, lorsqu'un emplacement de l'effleurement est inclus dans l'une des deuxièmes régions (412, 414, 416), quels caractères sont associés à la pluralité de zones formant la deuxième région.

2. Procédé de la revendication 1, comprenant en outre le fait d'utiliser, lorsque deux caractères ou plus sont identifiés, un logiciel de texte prédictif pour saisir l'un des caractères identifiés.

3. Procédé de la revendication 1, comprenant en outre le fait de fournir à un logiciel de texte prédictif une indication selon laquelle l'emplacement est plus proche de l'un des caractères identifiés que des autres caractères des caractères identifiés.

4. Procédé de la revendication 1, comprenant en outre le fait de fournir à un logiciel de texte prédictif une indication signalant à quel point l'emplacement est plus proche de l'un des caractères identifiés que des autres caractères des caractères identifiés.

5. Procédé de la revendication 1, dans lequel, pour un premier caractère de la pluralité de caractères dans une première rangée, une zone de l'écran tactile (204) associée au premier caractère est chevauchée par une zone de l'écran tactile (204) associée à un deuxième caractère d'une rangée adjacente à la première rangée.

6. Procédé de la revendication 1, dans lequel une première zone de la première pluralité de zones est limitée par au moins une première limite qui est une première distance par rapport au centre d'un premier caractère qui est associé uniquement à la première zone de la première pluralité de zones.

7. Procédé de la revendication 6, dans lequel une première zone de la première pluralité de zones est limitée par au moins une deuxième limite qui est une deuxième distance par rapport au centre d'un premier caractère qui est associé uniquement à la première zone de la première pluralité de zones, dans lequel la deuxième limite n'est pas identique à la première limite.

8. Support lisible par ordinateur ayant un code lisible par ordinateur pouvant être exécuté par au moins un processeur d'un dispositif électronique (100, 200) pour mettre en oeuvre le procédé de l'une des revendications précédentes.

9. Dispositif (100, 200) comprenant :
au moins une interface tactile configurée pour afficher une pluralité de caractères et recevoir un effleurement par un utilisateur ;
un microprocesseur (902) configuré :
pour associer une première pluralité de zones de l'au moins une interface tactile à la pluralité de caractères, où chacune de la première pluralité de zones est associée de manière unique à un seul caractère de la pluralité de caractères, où
la pluralité de zones se chevauchent pour former des premières régions qui représentent de manière unique un seul caractère, et des deuxièmes régions qui représentent plus d'un caractère de la pluralité de caractères, et
pour identifier, lorsqu'un emplacement de l'effleurement est inclus dans une première région de l'une de la première pluralité de zones, le caractère associé à la zone où la première région est formée ;
et pour identifier, lorsqu'un emplacement de l'effleurement est inclus dans l'une des deuxièmes régions (412, 414, 416), quels caractères sont associés à la pluralité de zones formant la deuxième région.

10. Dispositif (100, 200) de la revendication 9, dans lequel, pour un premier caractère de la pluralité de caractères dans une première rangée, une zone de l'au moins une interface tactile associée au premier caractère est chevauchée par une zone de l'au moins une interface tactile associée à un deuxième caractère d'une rangée adjacente à la première rangée.

11. Dispositif (100, 200) de la revendication 9, dans lequel la pluralité de caractères est agencée en une pluralité de rangées espacées d'une distance verticale suffisante de sorte qu'il n'y ait pas d'ambiguïté quant à savoir laquelle de la pluralité de rangées a subi un effleurement.

12. Dispositif (100, 200) de la revendication 9, dans lequel l'au moins une interface tactile comprend l'un quelconque d'un ou de plusieurs pavé(s) tactile(s) et un écran tactile (204).

13. Dispositif (100, 200) de la revendication 9, dans lequel le microprocesseur est configuré pour exécuter un module de logiciel de texte prédictif pour saisir un caractère lorsqu'une pluralité de caractères est identifiée.

14. Dispositif (100, 200) de la revendication 9, dans lequel une première zone de la première pluralité de zones est limitée par au moins une première limite qui est une première distance par rapport au centre d'un premier caractère qui est associé uniquement à la première région de la première pluralité de zones.

15. Dispositif (100, 200) de la revendication 14, dans lequel une première zone de la première pluralité de zones est limitée par au moins une deuxième limite qui est une deuxième distance par rapport au centre d'un premier caractère qui est associé uniquement à la première région de la première pluralité de zones, où la deuxième limite n'est pas identique à la première limite.
